# EUROPEAN PATENT APPLICATION

(11) **EP 3 510 906 A1**
(43) Date of publication of application: **17.07.2019**
(21) Application number: 19151052.8
(22) Date of filing: 09.01.2019
(51) Int. Cl.: A47J 43/07, A47J 27/00

(54) **A BOWL ASSEMBLY FOR A KITCHEN APPLIANCE**

(30) Priority: 12.01.2018 GB 201800559; 02.05.2018 LU 100784
(71) Applicant: Kenwood Limited, Havant, Hampshire PO9 2NH (GB)
(72) Inventor: PALMER, Paul, Havant, Hampshire PO9 2NH (GB); SEIDLER, Mark, Havant, Hampshire PO9 2NH (GB); PALMER, Andrew, Havant, Hampshire PO9 2NH (GB); HUNT, Martin, Havant, Hampshire PO9 2NH (GB); WESTWOOD, Adam, Havant, Hampshire PO9 2NH (GB)
(74) Representative: Hector, Annabel Mary

(57) **Abstract**

A bowl assembly (101) for a kitchen appliance arranged to process ingredients contained within the bowl assembly (101) comprises a bowl (103) having a base (104) and an aperture (111) in its base (104), and a sealing element (105) for sealing the aperture (111) which is arranged to extend beyond at most only one of the two sides of the aperture.

## Description

The present invention relates to a bowl assembly for a kitchen appliance, and in particular to a bowl assembly comprising a sealing element.

Kitchen appliances utilising a bowl containing a rotatable drive assembly to which a tool can be fitted are commonly used in the field of food preparation. Such kitchen appliances may also be arranged to heat the contents of the bowl.

Certain cooking operations, such as slow cooking, rice cooking, and *sous vide* water bath cooking, do not require a rotating tool, and furthermore the presence of such a tool may impact the performance of these operations by obstructing movement of the ingredients and reducing the usable space in the bowl. A bowl containing a rotating drive assembly is therefore not well-suited to perform these and many other cooking operations.

According to a first aspect of the invention, there is provided a bowl assembly for a kitchen appliance arranged to process ingredients contained within the bowl assembly, comprising: a bowl having a base and an aperture in its base; and a sealing element for sealing the aperture, wherein, when the aperture is sealed by the sealing element, the sealing element is arranged to extend beyond at most only one of the two sides of the aperture.

The bowl assembly can therefore provide a sealing arrangement that is space-saving on one side of the base.

As used herein, the sealing element being arranged to extend beyond at most only one of the two sides of the aperture preferably connotes that the sealing element may: extend right up to an entrance of the aperture *(i.e.* one of the two sides of the aperture) thereby being flush with the entrance, but not through any thickness of the aperture; extend into the aperture from one side of the aperture, but not out the other side of the aperture; or may be arranged only within the aperture. As used herein, reference to a *"side"* of the aperture preferably connotes the sides of the aperture spaced apart in a direction through the aperture, *i.e.* the entrance and exit of the aperture. As used herein, reference to *"within"* the aperture preferably connotes a volume entirely or substantially entirely enclosed by the aperture.

Preferably, the bowl assembly further comprises means for engaging the sealing element. Preferably, the means for engaging the sealing element is arranged so as to seal the aperture on the same side of the base as the means for engaging the sealing element.

According to another aspect of the invention, there is provided a bowl assembly for a kitchen appliance arranged to process ingredients contained within the bowl assembly, comprising: a bowl having a base and an aperture in its base; a sealing element for sealing the aperture; and means for engaging the sealing element arranged so as to seal the aperture on the same side of the base as the means for engaging.

The bowl assembly can therefore enable alternative ways of sealing the aperture that require little dexterity.

Preferably, when the aperture is sealed by the sealing element, the sealing element is arranged to extend beyond at most only one of the two sides of the aperture.

Preferably, when the aperture is sealed by the sealing element, the sealing element is arranged entirely outside of the aperture.

Preferably, when the aperture is sealed by the sealing element, the sealing element is arranged entirely within the aperture.

Preferably, when the aperture is sealed by the sealing element, the sealing element is arranged to extend into the aperture from one side of the aperture, but not to extend out the other side of the aperture.

The bowl assembly may further comprise a tool mount for a food processing tool, and preferably the tool mount and the sealing element are interchangeable with one another for sealing the aperture. Preferably, the tool mount and the sealing element are entirely removable.

Preferably, the tool mount is a drivable tool mount, and more preferably the drivable tool mount is drivable by a motor of the kitchen appliance.

Preferably, the sealing element seals the aperture from inside the bowl. Preferably, the sealing element only seals the aperture from inside the bowl.

Preferably, the means for engaging the sealing element is arranged inside the bowl, and more preferably only inside the bowl.

Preferably, the sealing element seals the aperture from outside the bowl. Preferably, the sealing element only seals the aperture from outside the bowl.

Preferably, the means for engaging the sealing element is arranged outside the bowl, and more preferably only outside the bowl.

Preferably, the sealing element is formed as a single piece, and more preferably comprises no moving parts.

Preferably, the sealing element extends up to the aperture.

Preferably, the means for engaging the sealing element extends the aperture, and more preferably into and/or out of the bowl.

Preferably, the sealing element comprises means for engaging the bowl so as to seal the bowl assembly, and more preferably the means for engaging the bowl and the means for engaging the sealing element are complementary.

Preferably, the sealing element comprises a sealing formation. Preferably, the sealing formation is arranged only within the bowl. Preferably, the sealing formation is arranged only outside the bowl.

Preferably, the sealing formation and the means for engaging the bowl are the same.

Preferably, the sealing formation comprises a flexible seal, a tongue and/or a groove.

Preferably, the sealing formation is mounted on the sealing element so as contact the base of the bowl when the aperture is sealed.

Preferably, the sealing formation surrounds the aperture thereby to seal the aperture.

Optionally, the sealing element is flat where the sealing element faces the away from the aperture or the sealing element is curved where the sealing element faces the away from the aperture.

Preferably, the sealing formation seals the lowest point of the bowl.

Preferably, the aperture is arranged centrally in the base.

Preferably, the bowl assembly comprises only one sealing element.

Preferably, the sealing element is coupled to the bowl, and more preferably by means of a hinge, pivot, tether and/or chain.

Preferably, the means for engaging the sealing element is at least one further aperture formed into the bowl, and more preferably the at least one further aperture is also sealed by the sealing element.

Preferably, the bowl assembly further comprises a guide for guiding the sealing element to move between a position in which the sealing element seals and unseals the aperture.

Preferably, the guide is arranged to guide the sealing element only to move perpendicularly or in parallel to the base of the bowl. Preferably, the guide is a rail, track, hinge and/or pivot.

Preferably, the means for engaging the sealing element is integrally formed with the bowl, and more preferably formed around the aperture.

Preferably, the means for engaging the sealing element is arranged distally to the aperture.

Preferably, the sealing element is any one of a: bowl liner; plug; bung; cap; lid; plate; valve; and cover.

Preferably, the means for engaging the bowl is any one of a: screw; screw thread; bolt; hinge; mounting rail; bayonet engagement; clip; lip; friction engagement; and a magnetic engagement.

Preferably, the means for engaging the sealing element is a rotational engagement.

Preferably, the means for engaging the sealing element is any one of a: screw; screw thread; bolt; hinge; mounting rail; bayonet engagement; clip; lip; friction engagement; and a magnetic engagement.

Preferably, the bowl assembly further comprises means for urging the sealing element towards the aperture, and more preferably the means for urging is a spring.

Preferably, the sealing element is arranged to cover the entire inner surface area of the base of the bowl, and more preferably at least 90% of the surface area, and still more preferably at least 80% of the surface area.

Preferably, the bowl assembly comprises a motor for actuating the sealing element so as to seal and/or unseal the aperture.

Preferably, the bowl assembly comprises means for engaging a drive output of the kitchen appliance so as to actuate the sealing element so as to seal and/or unseal the aperture.

Preferably, the sealing element comprises a heat conducting material, and more preferably copper, aluminium and/or steel.

Preferably, the bowl assembly comprising a further bowl having no aperture, and the bowl and the further bowl are interchangeable with one another for use with the kitchen appliance.

Preferably, the bowl assembly further comprises a detector for detecting whether the aperture has been sealed.

Preferably, the detector is a mechanical interlock, a magnetic switch (for example, a Reed switch) or an electrical switch (for example, a micro-switch arrangement).

Preferably, the sealing element comprises an identifier, and the detector is arranged to detect the proximity of the identifier, and more preferably the identifier is a Radio-Frequency IDentification (RFID) tag and the detector is an RFID reader.

Preferably, the bowl assembly comprises an interlock for inhibiting operation of the kitchen appliance if the aperture has been sealed, and more preferably as detected by the detector.

Preferably, the bowl assembly comprises a locking element for locking the sealing element when the sealing element seals the aperture, and more preferably the locking element is a spring-loaded pin.

Preferably, the cross-sectional shape of the tool mount is arranged to correspond with the shape of the aperture such that it can fit within and fill the aperture.

Preferably, the aperture is a keyed aperture, more preferably having a non-circular shape.

Preferably, the bowl is formed of a heat-conducting material.

Preferably, the bowl comprises a heating element, and is more preferably arranged in the base of the bowl.

Preferably, the heating element operates by electromagnetic induction.

Preferably, the bowl comprises an electrical socket.

According to another aspect of the invention, there is provided a combination comprising: a bowl assembly (preferably as described above) having an aperture in its base; and a further bowl assembly having a base with no aperture in its base, wherein the bowl assembly and the further bowl assembly are interchangeable for mounting on the kitchen appliance.

According to yet another aspect of the invention, there is provided a kitchen appliance comprising a bowl assembly as aforesaid.

Preferably, the kitchen appliance comprises a bowl assembly having a base with no aperture in its base, and the bowl assembly and the further bowl assembly are interchangeable for mounting on the kitchen appliance.

The invention described here may be used in any kitchen appliance and/or as a stand-alone device. This includes any domestic food-processing and/or preparation machine, including both top-driven machines (e.g., stand-mixers) and bottom-driven machines (e.g., food processors). It may be implemented in heated and/or cooled machines. The invention may also be implemented in both hand-held (e.g. hand blenders) and table-top (e.g., blenders) machines. It may be used in a machine that is built-in to a work-top or work surface, or in a stand-alone device. The invention can also be provided as a stand-alone device, whether motor-driven or manually powered.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances.

The invention extends to methods and/or apparatus substantially as herein described and/or as illustrated with reference to the accompanying drawings.

The invention extends to any novel aspects or features described and/or illustrated herein. In addition, apparatus aspects may be applied to method aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

As used herein, means plus function features may be expressed alternatively in terms of their corresponding structure, such as a suitably programmed processor and associated memory, for example.

Aspects and embodiments of the invention are set out in the appended claims. These and other aspects and embodiments of the invention are also described herein.

At least one embodiment of the invention will now be described, by way of example only, with reference to the accompanying drawings, in which:
Figures 1 and 2 show a cross section of a bowl, with a sealing element sealing an aperture of the bowl from inside the bowl;
Figures 3 and 4 show a cross section of a bowl, with a sealing element sealing an aperture of the bowl from outside the bowl;
Figures 5a, 5b, 6, 7a, 7b and 8 show further alternative examples of a sealing element sealing an aperture of the bowl; and
Figure 9 shows a base of a bowl with fixing holes for a sealing element.

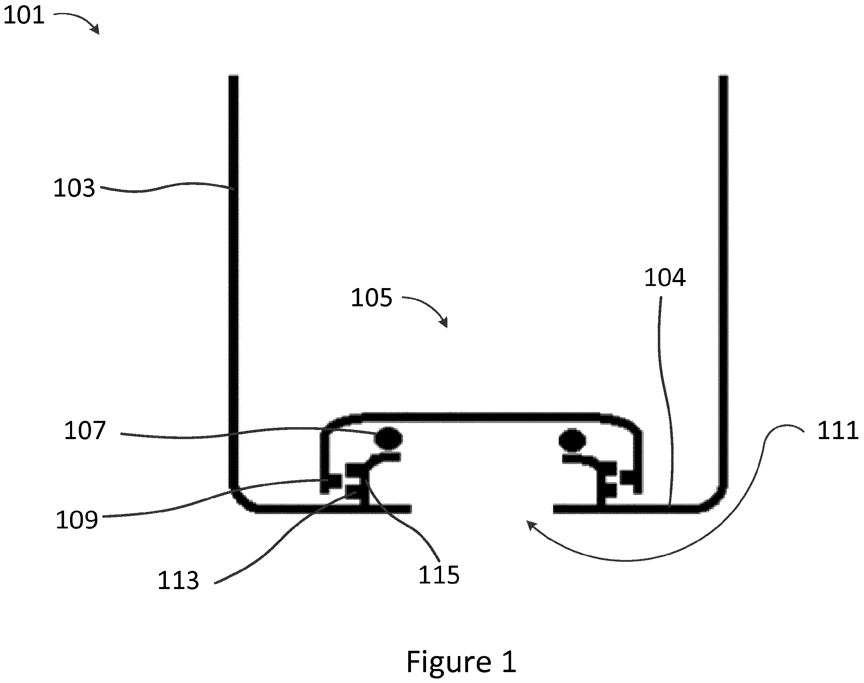

Figures 1 to 8 show a bowl assembly 101 for a kitchen appliance (not shown) arranged to process ingredients contained within the bowl assembly 101, the bowl assembly 101 comprising a bowl 103, having a base 104, with an aperture 111 in its base 104, a tool mount for a food processing tool (not shown) and a sealing element 105 for sealing the aperture 111. The tool mount and the sealing element 105 are interchangeable with one another for sealing the aperture 111; in this way a user may select to use the tool mount when processing foodstuffs or the sealing element when wishing to use the bowl merely as a container (for example, when heating or storing food).

When the aperture 111 is sealed by the sealing element 105, the sealing element 105 is arranged to extend no further than the aperture 111, that is, no deeper than the thickness of the portion of the base 104 into which the aperture is formed. This achieves a space saving on one side of the aperture. The sealing element 105 is arranged to cover (and/or plug) the aperture 111 to create a fluid-tight seal.

The sealing element further comprises a sealing formation or gasket 107, for example in the form of a flexible or labyrinthine (e.g. a tongue for a groove, or a groove for a tongue) seal, which surrounds the aperture. When the aperture is sealed by the sealing element, the sealing formation 107 is placed in contact with the bowl 103, in particular with the base of the bowl, so as to provide a barrier preventing the contents within the bowl 103 from escaping through the aperture.

The sealing element 105 further comprises means for engaging the bowl thereby to fix the sealing element to the bowl and fixedly seal the aperture. The means for engaging the bowl is arranged to generate sufficient pressure between the sealing formation 107 and the bowl 103 so as to seal the aperture 111. The means for engaging the bowl is, for example, in the form of a screw, screw thread (male or female), bayonet formation, snap-fit formation, friction fixture and/or magnetic coupling.

Furthermore, the bowl comprises means for engaging the sealing element, which is complementary to the means for engaging the bowl.

Figures 1 to 4 show examples of the bowl assembly, in which the sealing element 105 is in the form of a cap, and loosely akin to jam jar lid-type sealing elements. In the examples of Figures 1 to 4, the sealing element fits over and around the means for engaging the bowl. Furthermore, the sealing formation, means for engaging the sealing element and the means for engaging the bowl are all provided on the same side of the base.

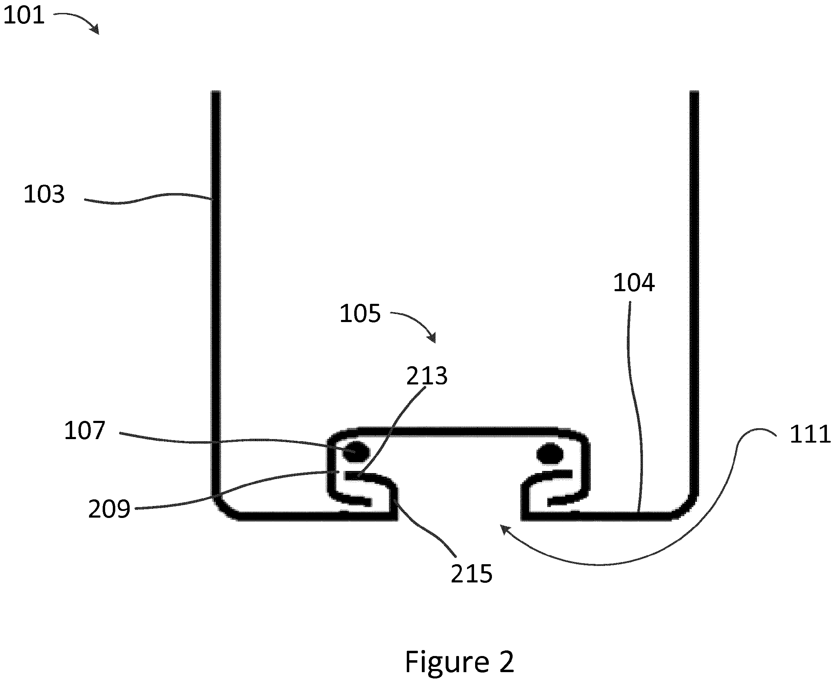

In more detail, Figure 1 and Figure 2 show cross sections of the bowl 103, in which the aperture 111 is sealed by the sealing element 105 from the inside of the bowl, in which the sealing element is in the form of an internal cap.

In the examples of Figures 1 and 2, the means for engaging the bowl is a male 109 and female 209 engagement (respectively) that is arranged to mate with a complementary female and male (respectively) means for engaging the sealing element 105.

In both examples, the means for engaging the sealing element is integrally formed as part of the bowl 103 and comprises an upstand 115, 215 extending from the inside of the base.

In more detail, in the example of Figure 1, the means for engaging the sealing element is a complementary female screw thread 113 (or grooved tabs). In the example of Figure 2, the means for engaging the sealing element is a complementary male screw thread 213.

In the examples of Figures 1 and 2, a user can attach or detach the sealing element 105 by introducing it into the bowl, and then screwing the sealing element onto the complementary screw thread 113, 213 of the means for engaging the sealing element; this is a relatively easy action that is achievable with one hand. Furthermore, the need for a plug that fits within and seals the aperture 111 is avoided, and the external profile of the bowl is made smoother and therefore also able to accommodate other features externally.

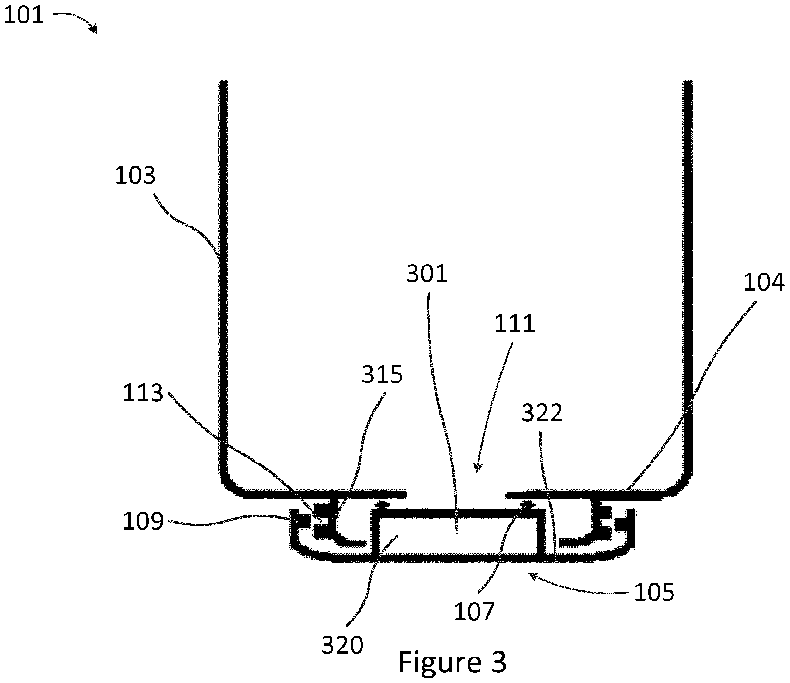

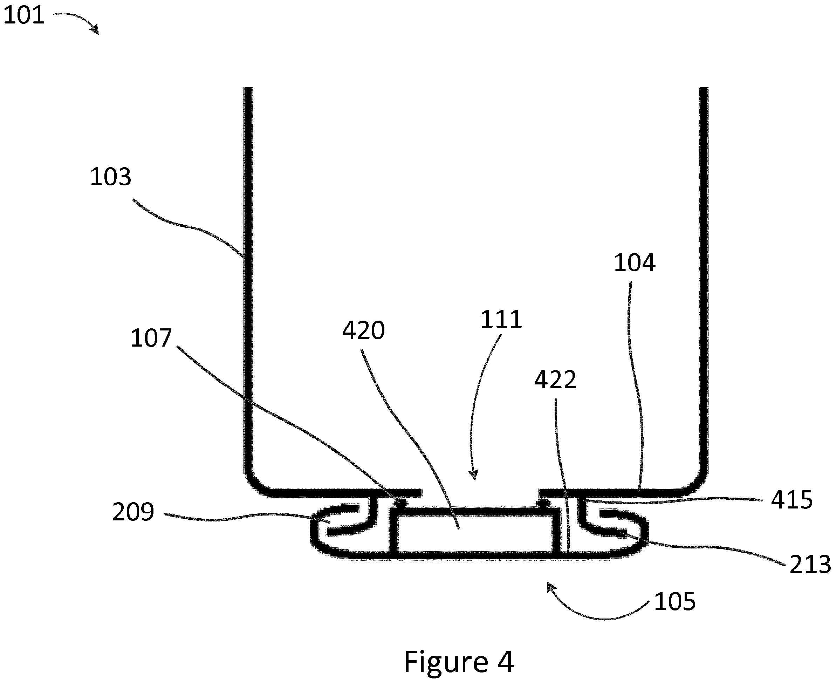

The examples of Figure 3 and 4 show cross sections of the bowl assembly 101, in which the aperture 111 is sealed from the outside of the bowl 103 by the sealing element 105.

In the examples of Figures 3 and 4, the means for engaging the bowl is a male 109 and female 209 engagement (respectively) that is arranged to mate with a complementary female and male (respectively) means for engaging the sealing element 105.

In both examples, the means for engaging the sealing element is integrally formed as part of the bowl 103 and comprises a wall 315, 415 depending downwardly from the outside of the base.

More specifically, in Figure 3 (in a similar arrangement to that shown and described with reference to Figure 1), the means for engaging the sealing element is a complementary female screw thread 113 (or grooved tabs). In the example of Figure 4, the means for engaging the sealing element is a complementary male screw thread 213.

In the examples of Figures 3 and 4, the sealing element 105 comprises a mount (a raised portion) 320, 420 for the sealing formation 107. The mount extends from an internal floor 322, 422 of the sealing element 105 towards and proximate to the aperture 111, thereby to position the sealing formation 107 (when the aperture is sealed) against the external side of the base of the bowl. The mount 320, 420 presses the sealing formation 107 against the base 104 so as to generate a seal proximate to the aperture and reduces (compared to if the mount were not present) the volume available for fluid to flow into the sealing element. In this way, the location of the sealing formation by the mount 301 prevents the creation of a substantial cavity in the sealing element into which ingredients could settle (thereby mitigating the risk of exposure to undesirable cooking temperatures).

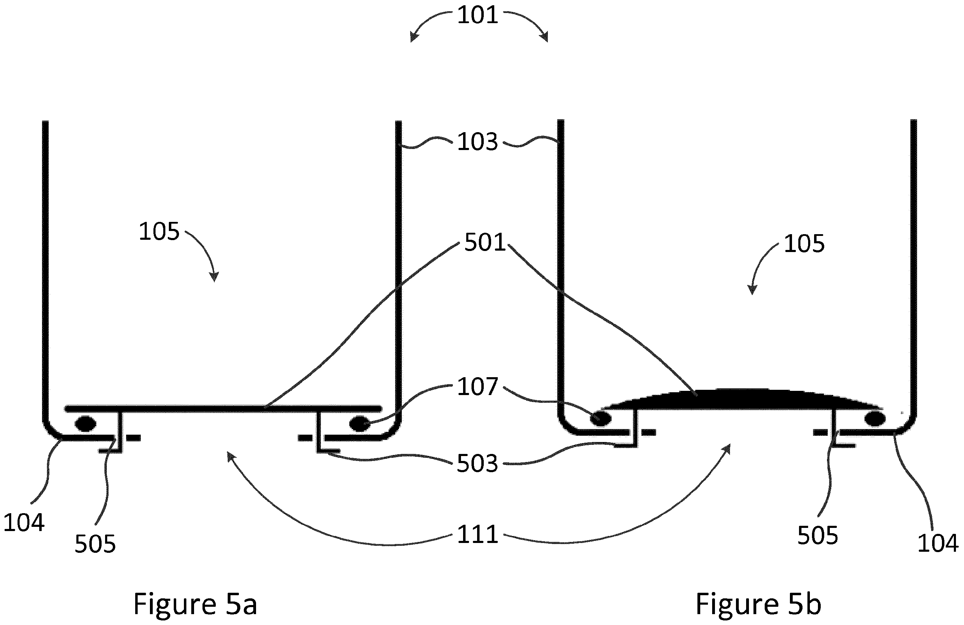

Figures 5a and 5b show further examples of the bowl assembly 101 comprising a sealing element 105 having a plate (also referred to as a "cap") 501.

In more detail, Figure 5a and 5b show cross sections of the bowl assembly 101 in which the aperture 111 is sealed by the plate 501. The plate 501 is dimensioned to cover part *(i.e.* at least the aperture), or all, of the base 104. Furthermore, the sealing formation and the plate 501 are provided on the same side of the base.

The shape and/or dimensions of the plate 501 can vary if additional structural features are required for strength, accommodation of other features, usability, desired distribution of food within the bowl, and/or sealing. However, at least, a rectangular, circular or elliptical plate is appropriate.

Figure 5a shows an example in which the plate 501 has a flat upper (*i.e.* within the bowl and away from the aperture 111) surface. Figure 5b shows an example where the plate 501 is convexly curved on its upper surface.

In the examples shown in Figures 5a and 5b, the plate 501 seals the aperture 111 from the inside of the bowl 103. The sealing formation 107 is arranged on an underside of the plate, thereby to position (or "sandwich") the sealing formation between the plate 501 and the (inside of the) base 104.

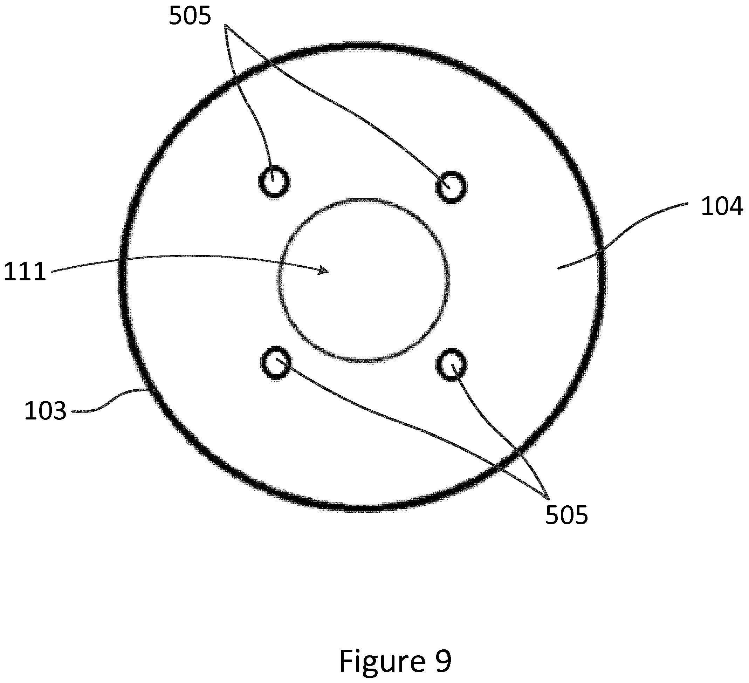

The means for engaging the bowl are provided on the plate, for example in the form of bayonet members 503 arranged to engage the plate 501 to the base 104. The bowl is therefore provided with means for engaging the sealing assembly in the form of a complementary socket 505, for example a hole (other than the aperture 111) for receiving and engaging with the bayonet member(s) 503. Figure 9 shows in more detail the complementary sockets 505 formed into the base, as well as the aperture 111.

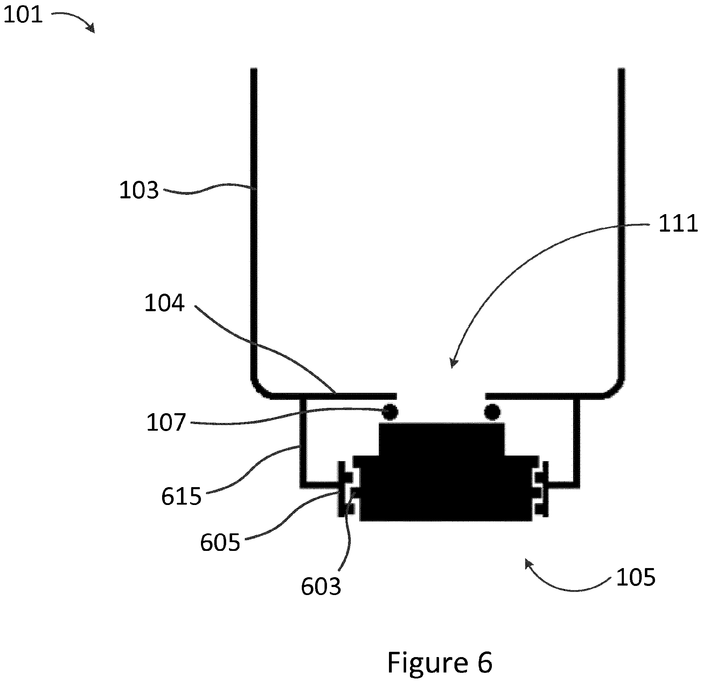

Figure 6 shows a further example of the bowl assembly 101, wherein the sealing element 105 is in the form of an external plug.

In the example of Figure 6, the means for engaging the sealing element is integrally formed as part of the bowl 103 and comprises a wall 615 depending downwardly from the outside of the base. The means for engaging the sealing element fits over and around the sealing element 105 (when the aperture 111 is sealed), and the sealing element is therefore provided with means for engaging the bowl 103 around the periphery of the sealing element. The aperture 111 is sealed by the sealing element 105 from outside the bowl 103, and the sealing element is therefore external to the bowl.

In the example of Figure 6, the means for engaging the bowl is a screw thread 603, and the bowl 103 comprises a complementary screw thread 605 (akin to a nut) as the means for engaging the sealing element 105. The screw thread 605 is integrally formed with the bowl 103 as part of the wall 615. In an alternative, the plug 601 is also available to seal the aperture 111 from the inside of the bowl 103.

The receiving member 607 allows the plug to position the sealing formation 107 such that the sealing formation 107 generates a seal against the underside of the base.

The sealing element 105 shown in and described with reference to Figure 6 is therefore analogous to a threaded rod or bolt or to a ribbed plug, whereas the sealing element 105 shown in and described with reference to, in particular, Figure 3, is analogous to a screw top lid.

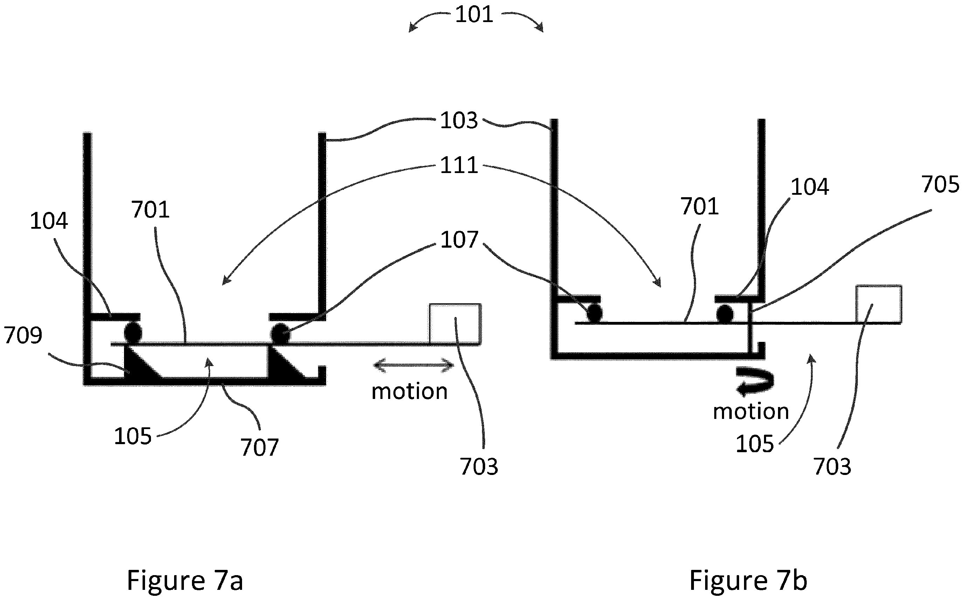

Figures 7a and 7b show further examples of the bowl assembly, in which the sealing element 105 is a movable plate 701.

In more detail, the sealing element 105 comprises a plate 701 that is coupled to the bowl assembly and arranged to move to seal or unseal the aperture 111. The sealing element 105 further comprises a sealing formation 107 arranged on the plate and position between the base 104 and the plate 701. The plate 701 comprises a handle 703 to allow a user to move the plate 701 so as to seal or unseal the aperture 111.

In the example of Figure 7a, the plate 701 is movable linearly to seal or unseal the aperture 111, for example bowl assembly comprises a track or rail that linearly guides the plate. The bowl assembly includes an integrated ramp structure 707 to retain the plate 701 in the sealed position and force the sealing formation 107 against the base. The ramp structure 707 includes one or more ramps 709 which push the plate 701 towards the base 104 when the plate is in the sealed position. While Figure 7a shows a ramp structure 707, it should be understood that any alternative structure which forces the plate 701 towards the base 104 of the bowl 103, such that the sealing formation 107 generates a seal, would be suitable for this bowl assembly 101, for example a spring.

In the example of Figure 7b, the plate 701 is coupled to the bowl assembly by a pivot 705 so as to allow the plate to be manoeuvred to seal or unseal the aperture 111. The bowl assembly also comprises a structure for urging the plate 701 towards the base 104 of the bowl 103, such as a spring or a ramped arrangement as per Figure 7a.

The plates in the examples of Figures 7a and 7b are moved manually by a user or by a motor, the motor being part of the bowl assembly or the kitchen appliance to which the bowl assembly is coupled.

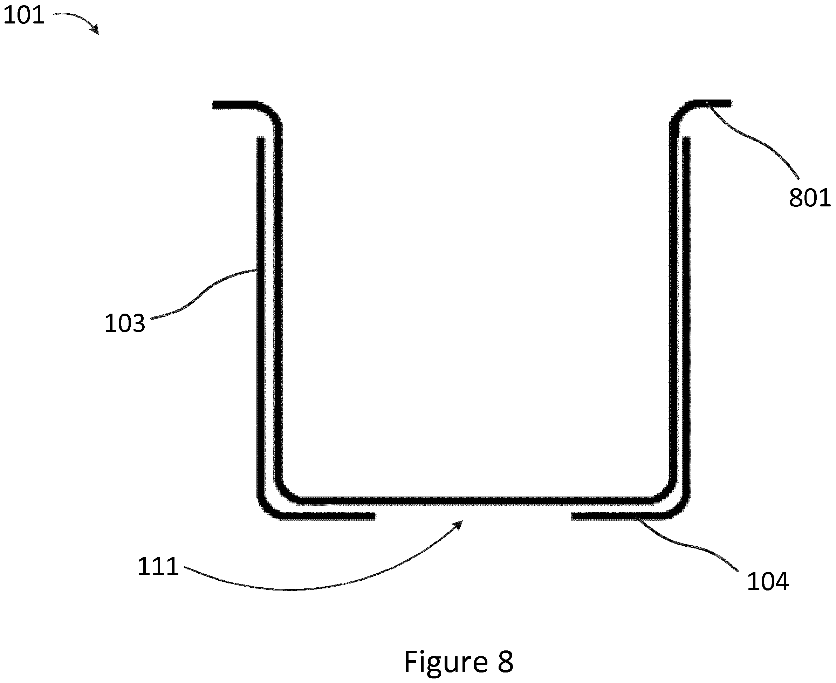

Figure 8 shows yet a further example of the bowl 103 and sealing element 105, wherein the sealing element 105 is a bowl liner 801.

The bowl liner 801 is formed from a rigid and/or flexible material(s), and is arranged to be inserted into the bowl so as to contain the foodstuff directly in the bowl liner, rather than directly in the bowl (thereby keeping the bowl itself clean). The bowl liner therefore seals the bowl by lining the inside of the bowl. In one example, the bowl liner 801 is collapsible.

The bowl liner 801 is formed of or comprises a heat conducting material so as to improve heat transfer to the contents of the bowl liner. For example, the bowl liner is formed of, or comprises, aluminium, steel and/or copper. The inside of the bowl (*i.e.* the surface that is in direct contact with food) is formed of a food-safe material.

In one example, the bowl liner 801 and the bowl are provided with complementary means for engagement. In an alternative example, in particular where the bowl liner is rigid, the bowl liner 801 and the bowl are not provided with means for engagement to one another, in which case the bowl liner simply rests on the base of the bowl.

The bowl liner 801 is dimensioned to fit within the bowl (and it is therefore smaller than the bowl), and substantially up to the interior walls of the bowl.

Figure 9 shows an example of the base 104 of the bowl 103 viewed from above or below, wherein the base 104 comprises fixing holes 505 as part of the means for engaging the sealing element.

### Alternatives and modifications

In an alternative there is provided a separate bowl, additional to the bowl 103, which does not have an aperture. The separate bowl is interchangeable with the bowl 103, so that the bowl 103 can be used for food processing functions, where a tool mount is needed, and the separate bowl can be used for cooking functions, where a tool mount is not needed.

In an alternative example to that shown in Figures 5, the plate 501 is attached by a pivot / hinge to the bowl so that when the tool mount is needed the plate is lifted to unseal the aperture 111 and allow the tool mount to pass through. This reduces the chance that the plate 501 will become lost while not in use. The plate 501 is also available to seal the aperture 111 from the outside of the bowl 103.

In an alternative, the bowl, and in particular the means for engaging the sealing element, comprises the sealing formation or gasket 107. When the aperture is sealed by the sealing element, the sealing formation 107 is placed in contact with the sealing element, so as to provide a barrier preventing the contents within the bowl 103 from escaping.

Whilst Figure 1 to 8 show specific examples of means for engaging the sealing element and means for engaging the bowl, it should be understood that any complementary engagement formation which allows the sealing element to engage the bowl so as to seal the aperture is available to be incorporated.

In more detail, Figure 9 shows the base 104 of the bowl 103 with fixing holes 901 through which a sealing element can be fixed to the bowl 103. The fixing holes 901 allow a sealing element to engage the bowl 103 through the base 104 of the bowl 103, but not through the aperture 111 of the bowl 103. An example of such an arrangement is the case where a cap is arranged to cover and seal the aperture 111 from the inside of the bowl 103, and where features in the cap pass through these fixing holes 901 and mate with either a fixed feature on the outside of the bowl 103 or a separate part to lock it in place.

The fixing holes 901 may not pass all the way through the base 104 of the bowl 103. For example, the sealing element may be secured to the base 104 of the bowl 103 by screws which pass through the sealing element and screw into the fixing holes 901 in the base 104 of the bowl 103. In this case, the fixing holes 901 would have a screw thread on their inside, and need not pass all the way through the base 104 of the bowl 103 in order to receive a screw.

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A bowl assembly for a kitchen appliance arranged to process ingredients contained within the bowl assembly, comprising:
a bowl having a base and an aperture in its base; and
a sealing element for sealing the aperture, wherein, when the aperture is sealed by the sealing element, the sealing element is arranged to extend beyond at most only one of the two sides of the aperture.

2. A bowl assembly according to Claim 1, further comprising means for engaging the sealing element, preferably wherein the means for engaging the sealing element is arranged so as to seal the aperture on the same side of the base as the means for engaging the sealing element.

3. A bowl assembly for a kitchen appliance arranged to process ingredients contained within the bowl assembly, comprising:
a bowl having a base and an aperture in its base;
a sealing element for sealing the aperture; and
means for engaging the sealing element arranged so as to seal the aperture on the same side of the base as the means for engaging.

4. A bowl assembly according to Claim 3, wherein, when the aperture is sealed by the sealing element, the sealing element is arranged to extend beyond at most only one of the two sides of the aperture.

5. A bowl assembly according to any preceding claim, wherein, when the aperture is sealed by the sealing element, the sealing element is either: arranged to extend entirely outside of the aperture, arranged to extend entirely within the aperture, or arranged to extend into the aperture from one side of the aperture, but not to extend out the other side of the aperture; and/or wherein the sealing element seals the aperture from inside the bowl, preferably only from inside the bowl; or wherein the sealing element seals the aperture from outside the bowl, preferably only from outside the bowl; and/or wherein the sealing element is formed as a single piece, and preferably comprises no moving parts; and/or wherein the sealing element extends up to the aperture.

6. A bowl assembly according to any preceding claim, further comprising a tool mount for a food processing tool wherein the tool mount and the sealing element are interchangeable with one another for sealing the aperture, optionally wherein the tool mount is a drivable tool mount, preferably wherein the drivable tool mount is drivable by a motor of the kitchen appliance and/or wherein the cross-sectional shape of the tool mount is arranged to correspond with the shape of the aperture such that it can fit within and fill the aperture, preferably wherein the aperture is a keyed aperture, preferably having a non-circular shape.

7. A bowl assembly according to any of Claims 2 to 6, wherein the means for engaging the sealing element: is arranged inside the bowl, and preferably only inside the bowl; is arranged outside the bowl, and preferably only outside the bowl; and/or extends the aperture, preferably into and/or out of the bowl; and/or is at least one further aperture formed into the bowl, preferably wherein the at least one further aperture is also sealed by the sealing element; and/or is integrally formed with the bowl, and preferably formed around the aperture, and/or is arranged distally to the aperture.

8. A bowl assembly according to any preceding claim, wherein the sealing element comprises means for engaging the bowl so as to seal the bowl assembly, preferably wherein the means for engaging the bowl and the means for engaging the sealing element are complementary, and/or wherein the means for engaging the bowl is any one of a: screw; screw thread; bolt; hinge; mounting rail; bayonet engagement; clip; lip; friction engagement; and a magnetic engagement and/or wherein the sealing element comprises a sealing formation, optionally wherein the sealing formation and the means for engaging the bowl are the same, and preferably wherein the sealing formation comprises a flexible seal, a tongue and/or a groove and/or wherein the sealing formation is mounted on the sealing element so as contact the base of the bowl when the aperture is sealed, and/or wherein the sealing formation surrounds the aperture thereby to seal the aperture, and/or wherein the sealing element is flat or is curved where the sealing element faces the away from the aperture, and/or wherein the sealing formation seals the lowest point of the bowl.

9. A bowl assembly according to any preceding claim, wherein the aperture is arranged centrally in the base, and/or comprising only one sealing element, and/or wherein the sealing element is coupled to the bowl, preferably by means of a hinge, pivot, tether and/or chain, and/or further comprising a guide for guiding the sealing element to move between a position in which the sealing element seals and unseals the aperture, preferably wherein the guide is arranged to guide the sealing element only to move perpendicularly or in parallel to the base of the bowl, optionally wherein the guide is a rail, track, hinge and/or pivot.

10. A bowl assembly according to any preceding claim, wherein the sealing element is any one of a: bowl liner; plug; bung; cap; lid; plate; valve; and cover, and/or wherein the sealing element is arranged to cover the entire inner surface area of the base of the bowl, preferably at least 90% of the surface area, and more preferably at least 80% of the surface area, and/or wherein the sealing element comprises a heat conducting material, preferably copper, aluminium and/or steel..

11. A bowl assembly according to any of Claims 2 to 10, wherein the means for engaging the sealing element is a rotational engagement, and/or wherein the means for engaging the sealing element is any one of a: screw; screw thread; bolt; hinge; mounting rail; bayonet engagement; clip; lip; friction engagement; and a magnetic engagement.

12. A bowl assembly according to any preceding claim, further comprising means for urging the sealing element towards the aperture, preferably wherein the means for urging is a spring, and/or further comprising a motor for actuating the sealing element so as to seal and/or unseal the aperture, optionally further comprising means for engaging a drive output of the kitchen appliance so as to actuate the sealing element so as to seal and/or unseal the aperture.

13. A bowl assembly according to any preceding claim, further comprising a detector for detecting whether the aperture has been sealed, optionally wherein the detector is a mechanical interlock, a magnetic switch (for example, a Reed switch) or an electrical switch (for example, a micro-switch arrangement) and preferably wherein the sealing element comprises an identifier, and wherein the detector is arranged to detect the proximity of the identifier, preferably wherein the identifier is a Radio-Frequency IDentification (RFID) tag and the detector is an RFID reader, and/or wherein the bowl assembly comprises an interlock for inhibiting operation of the kitchen appliance if the aperture has been sealed, preferably as detected by the detector, and/or wherein the bowl assembly comprises a locking element for locking the sealing element when the sealing element seals the aperture, preferably wherein the locking element is a spring-loaded pin.

14. A bowl assembly according to any preceding claim, wherein the bowl is formed of a heat-conducting material, and/or wherein the bowl comprises a heating element, preferably arranged in the base of the bowl, optionally wherein the heating element operates by electromagnetic induction, and/or wherein the bowl comprises an electrical socket.

15. A kitchen appliance comprising a bowl assembly according to any of Claim 1 to 14, preferably further comprising a bowl assembly having a base with no aperture in its base, wherein the bowl assembly and the further bowl assembly are interchangeable for mounting on the kitchen appliance.
